# EUROPEAN PATENT SPECIFICATION

(11) **EP 2 253 444 B1**
(45) Date of publication and mention of the grant of the patent: **04.01.2017**
(21) Application number: 10162901.2
(22) Date of filing: 17.05.2010
(51) Int. Cl.: B29C 45/37, B29C 33/56, B29C 51/10

(54) **Concavo-convex part forming method**
Verfahren zur Formung eines konkav-konvexen Bauteils
Procédé de formation d'une pièce concavo-convexe

(30) Priority: 19.05.2009 JP 2009121071
(43) Date of publication of application: 24.11.2010
(73) Proprietor: Panasonic Intellectual Property Management Co., Ltd., Osaka 540-6207 (JP)
(72) Inventor: Shibata, Gakuei, Osaka 540-6207 (JP); Kaneuchi, Kazuhiko, Osaka 540-6207 (JP); Inoue, Yoshio, Osaka 540-6207 (JP)
(74) Representative: Grünecker Patent- und Rechtsanwälte PartG mbB

(56) References cited:
- JP-A- 2006 305 898
- JP-A- 2008 162 165
- US-A1- 2002 175 450
- US-A1- 2009 051 077

## Description

### BACKGROUND OF THE INVENTION

### Field of the Invention

The present invention relates to a concavo-convex part forming method which can be used to decorate surfaces of products such as cell phones, television sets, and refrigerators as well as produce Braille characters on product surfaces.

### Related art of the Invention

JP 2008 162165 A relates to a surface treatment method for obtaining a resin-molded product. JP 2006 305898 A relates to a method for producing a resin molding.

Conventionally, a concavo-convex part forming method used to form a concavo-convex part on a product surface for decorative purposes mainly involves etching (so-called embossing) a cavity surface of a die and transferring the etching pattern to the surface of the product during molding of the product.

Concavo-convex part forming methods which do not use etching are also known these days.

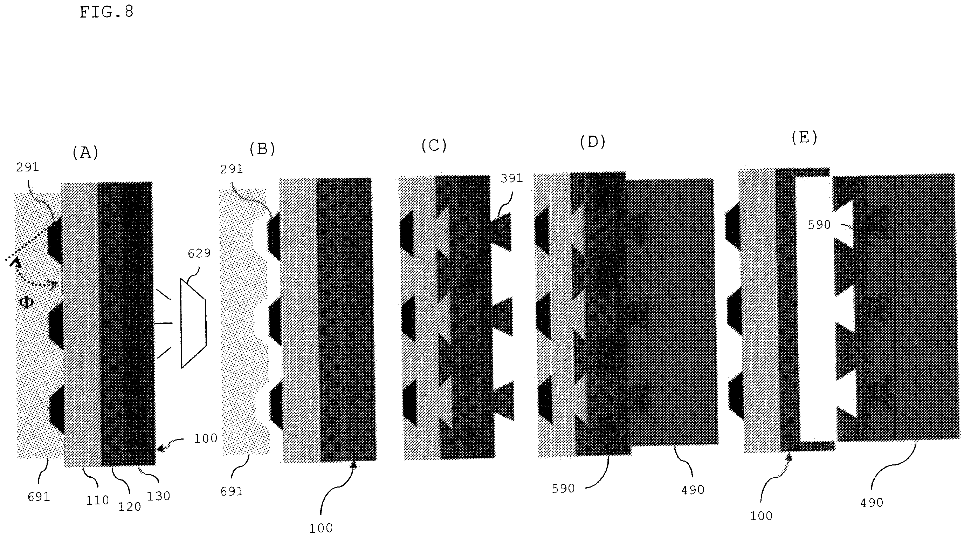

A conventional concavo-convex part forming method which uses a die whose cavity surfaces are not etched (see, for example, Japanese Patent Laid-Open No. 2-310018) will be described mainly with reference to FIGS. 8(A) to 8(E).

FIG. 8(A) is a schematic sectional view for illustrating a convex part forming step (former stage) of a conventional concavo-convex part forming method, FIG. 8(B) is a schematic sectional view for illustrating the convex part forming step (latter stage) of the conventional concavo-convex part forming method, FIG. 8(C) is a schematic sectional view for illustrating a protruding part forming step of the conventional concavo-convex part forming method, FIG. 8(D) is a schematic sectional view for illustrating a molding producing step (former stage) of the conventional concavo-convex part forming method, and FIG. 8(E) is a schematic sectional view for illustrating the molding producing step (latter stage) of the conventional concavo-convex part forming method.

For use in forming a concavo-convex part 590 on a surface of a molding 490, a concavo-convex-part-forming convex part 291 is formed on a first surface of a transfer film 100.

The transfer film 100 includes a base material layer 110, a peelable layer 120, and a decorative layer 130.

In a relief mold 691 aligned with a surface of the base material layer 110, i.e., the first surface of the transfer film 100, the concavo-convex-part-forming convex part 291 is formed using an ultraviolet-curing resin cured with ultraviolet light radiated by a ultraviolet (UV) irradiator 629 from the side of the decorative layer 130, which is a second surface of the transfer film 100.

Next, the resulting concavo-convex-part-forming convex part 291 is pushed into the transfer film 100 to form a concavo-convex-part-forming protruding part 391 on the second surface of the transfer film 100.

The concavo-convex-part-forming convex part 291 is pushed into the transfer film 100 by placing the first surface of the transfer film 100 in close contact with a cavity surface of a first die (not shown).

Then, the molding 490 provided with the concavo-convex part 590 is produced using the resulting concavo-convex-part-forming protruding part 391.

The first die whose cavity surface is placed in close contact with the first surface of the transfer film 100 and a second die (not shown) paired with the first die are clamped together and a molding resin for the molding 490 is injected into a cavity space between the first die and the second die, thereby producing the molding 490.

### SUMMARY OF THE INVENTION

However, with the conventional concavo-convex part forming method described above, it is sometimes difficult to give a high-quality appearance to product surface decoration, Braille characters and the like.

The present inventor analyzes the causes of the difficulty as follows.

Specifically, the concavo-convex-part-forming convex part 291 often has a shape that tapers toward the tip.

This is because the concavo-convex-part-forming convex part 291, which has to be able to be released from the relief mold 691, is shaped such that a contact angle Φ with the surface of the base material layer 110 will not be an obtuse angle.

Therefore, the concavo-convex-part-forming protruding part 391, which is formed by transferring and pushing the concavo-convex-part-forming convex part 291 into the transfer film 100 as described above, consequently has a shape that thickens toward the end.

Consequently, internal stresses are concentrated on the concavo-convex-part-forming protruding part 391 during mold release and amplified by the shape that thickens toward the end, increasing the likelihood of mold sticking.

In the worst case, mold release will be rendered totally impossible and a forceful attempt at mold release can cause part of an image pattern to be lost without being transferred as intended.

In view of the conventional problems described above, an object of the present invention is to provide a concavo-convex part forming method capable of giving a higher-quality appearance to product surface decoration, Braille characters and the like.

The 1^{st} aspect of the present invention is a concavo-convex part forming method as defined in claim 1.

The 2^{nd} aspect of the present invention is the concavo-convex part forming method according to the 1^{st} aspect of the present invention, wherein

the torn-foil-burr-proof convex part is narrower in width than the concavo-convex-part-forming convex part.

The 3^{rd} aspect of the present invention is the concavo-convex part forming method according to the 1^{st} aspect of the present invention, wherein
the torn-foil-burr-proof convex part is higher than the concavo-convex-part-forming convex part.

The present invention configured as described above can provide a concavo-convex part forming method capable of giving a higher-quality appearance to product surface decoration, Braille characters and the like.

### BRIEF DESCRIPTION OF THE DRAWINGS

FIG. 1(A) is a schematic sectional view for illustrating a convex part forming step of a concavo-convex part forming method according to a first embodiment of the present invention;
FIG. 1 (B) is a schematic sectional view for illustrating a protruding part forming step of the concavo-convex part forming method according to the first embodiment of the present invention;
FIG. 1(C) is a schematic sectional view for illustrating a molding producing step (former stage) of the concavo-convex part forming method according to the first embodiment of the present invention;
FIG. 1(D) is a schematic sectional view for illustrating the molding producing step (latter stage) of the concavo-convex part forming method according to the first embodiment of the present invention;
FIG. 2 is a schematic, partial, enlarged sectional view for illustrating a convex part forming step of the concavo-convex part forming method according to the first embodiment of the present invention;
FIG. 3(A) is a schematic side view for illustrating an in-mold preparation process of the concavo-convex part forming method according to the first embodiment of the present invention;
FIG. 3(B) is a schematic side view for illustrating a suction and film clamping process of the concavo-convex part forming method according to the first embodiment of the present invention;
FIG. 3(C) is a schematic side view for illustrating a molding resin injection preparation process of the concavo-convex part forming method according to the first embodiment of the present invention;
FIG. 3(D) is a schematic side view for illustrating a molding resin injection and cooling process of the concavo-convex part forming method according to the first embodiment of the present invention;
FIG. 3(E) is a schematic side view for illustrating a mold release process of the concavo-convex part forming method according to the first embodiment of the present invention;
FIG. 3(F) is a schematic side view for illustrating a suction release and film unclamping process of the concavo-convex part forming method according to the first embodiment of the present invention;
FIG. 4(A) is a schematic sectional view for illustrating a convex part forming step of the concavo-convex part forming method according to the first embodiment of the present invention;
FIG. 4(B) is a schematic sectional view for illustrating a protruding part forming step of the concavo-convex part forming method according to the first embodiment of the present invention;
FIG. 4(C) is a schematic sectional view for illustrating a molding producing step (former stage) of the concavo-convex part forming method according to the first embodiment of the present invention;
FIG. 4(D) is a schematic sectional view for illustrating the molding producing step (latter stage) of the concavo-convex part forming method according to the first embodiment of the present invention;
FIG. 5(A) is a schematic sectional view for illustrating a convex part forming step of the concavo-convex part forming method according to the first embodiment of the present invention;
FIG. 5(B) is a schematic sectional view for illustrating a protruding part forming step of the concavo-convex part forming method according to the first embodiment of the present invention;
FIG. 5(C) is a schematic sectional view for illustrating a molding producing step (former stage) of the concavo-convex part forming method according to the first embodiment of the present invention;
FIG. 5(D) is a schematic sectional view for illustrating the molding producing step (latter stage) of the concavo-convex part forming method according to the first embodiment of the present invention;
FIG. 6(A) is a schematic sectional view for illustrating a positional relationship between a first die and molding at the start of mold release, according to the first embodiment of the present invention;
FIG. 6(B) is a schematic sectional view for illustrating a positional relationship between the first die and molding in the middle of mold release, according to the first embodiment of the present invention;
FIG. 6(C) is a schematic sectional view for illustrating a positional relationship between the first die and molding at the end of mold release, according to the first embodiment of the present invention;
FIG. 7 is a schematic side view of a concavo-convex part forming apparatus according to a illustrative embodiment not part of the present invention;
FIG. 8(A) is a schematic sectional view for illustrating a convex part forming step (former stage) of a conventional concavo-convex part forming method;
FIG. 8(B) is a schematic sectional view for illustrating the convex part forming step (latter stage) of the conventional concavo-convex part forming method;
FIG. 8(C) is a schematic sectional view for illustrating a protruding part forming step of the conventional concavo-convex part forming method;
FIG. 8(D) is a schematic sectional view for illustrating a molding producing step (former stage) of the conventional concavo-convex part forming method; and
FIG. 8(E) is a schematic sectional view for illustrating the molding producing step (latter stage) of the conventional concavo-convex part forming method.

### Description of Symbols

- 100: transfer film
- 110: base material layer
- 120: peelable layer
- 130: decorative layer
- 131: hard coat layer
- 132: anchor layer
- 133: color layer
- 134: bonding layer
- 210: droplet
- 211, 231,232,291: concavo-convex-part-forming convex parts
- 221: torn-foil-burr-proof convex part
- 311, 311 a, 311 b, 331, 332, 391: concavo-convex-part-forming protruding parts
- 321: torn-foil-burr-proof protruding part
- 410,420,430,490: moldings
- 510, 530, 590: concavo-convex parts
- 600: first unit
- 611: inkjet printer
- 621, 629: ultraviolet irradiators
- 691: relief mold
- 700: second unit
- 710: first die
- 720: second die
- 721: gate
- 731, 732: film clamps
- 741-748: rollers
- 751: ultraviolet irradiator
- 800: transfer film
- 810: base material layer
- 820: peelable layer
- 900: image pattern transfer film

### PREFERRED EMBODIMENTS OF THE INVENTION

Embodiments of the present invention will be described in detail below with reference to the drawings.

### (First embodiment)

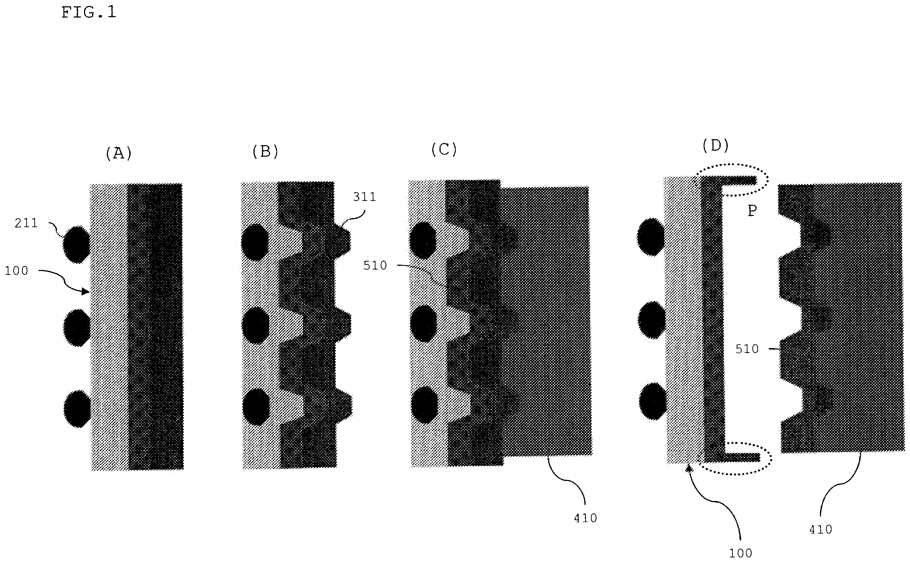

First, a concavo-convex part forming method according to the present embodiment will be described mainly with reference to FIGS. 1(A) to 1(D).

FIG. 1 (A) is a schematic sectional view for illustrating a convex part forming step of the concavo-convex part forming method according to the first embodiment of the present invention, FIG. 1(B) is a schematic sectional view for illustrating a protruding part forming step of the concavo-convex part forming method according to the first embodiment of the present invention, FIG. 1(C) is a schematic sectional view for illustrating a molding producing step (former stage) of the concavo-convex part forming method according to the first embodiment of the present invention, and FIG. 1(D) is a schematic sectional view for illustrating the molding producing step (latter stage) of the concavo-convex part forming method according to the first embodiment of the present invention.

The concavo-convex part forming method according to the present embodiment includes a convex part forming step, a protruding part forming step, and a molding producing step. In the convex part forming step, a concavo-convex-part-forming convex part 211 is formed such that a concavo-convex-part-forming protruding part 311 will be formed to have a shape that tapers toward the tip in the protruding part forming step.

First, in the convex part forming step, the concavo-convex-part-forming convex part 211 is formed on a first surface of a transfer film 100 in order to later form a concavo-convex part 510 on a surface of a molding 410.

As will be described in more detail later, the concavo-convex-part-forming convex part 211 is formed from an ultraviolet-curing resin by inkjet printing in such a way as to have a shape that thickens toward the end.

Next, in the protruding part forming step, the resulting concavo-convex-part-forming convex part 211 is pushed into the transfer film 100 to form the concavo-convex-part-forming protruding part 311 on a second surface of the transfer film 100.

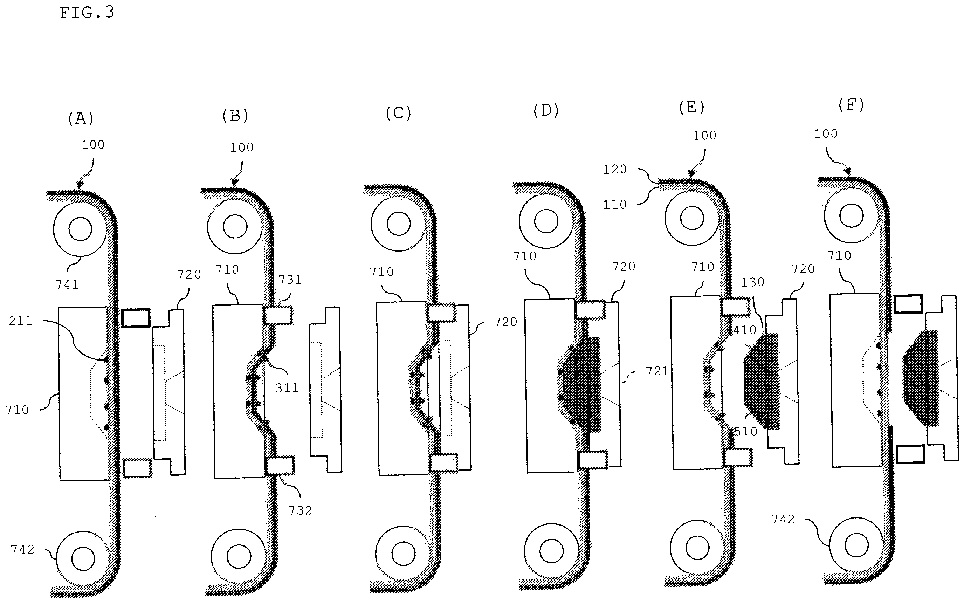

As will be described in more detail later, according to the present embodiment, the concavo-convex-part-forming convex part 211 is pushed into the transfer film 100 by placing the first surface of the transfer film 100 in close contact with a cavity surface of a first die 710 (see FIG. 3(B)).

Then, in the molding producing step, the molding 410 provided with the concavo-convex part 510 is produced using the resulting concavo-convex-part-forming protruding part 311.

As will be described in more detail later, according to the present embodiment, the first die 710 whose cavity surface is placed in close contact with the first surface of the transfer film 100 and a second die 720 (see FIG. 3(C)) paired with the first die 710 are clamped together, a molding resin for the molding 410 is injected into a cavity space between the first die 710 and second die 720, thereby producing the molding 410.

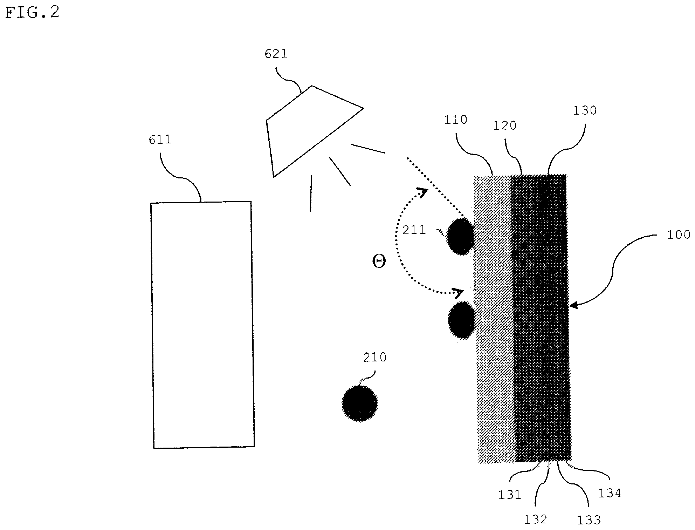

Next, formation of the concavo-convex-part-forming convex part 211 according to the present embodiment will be more concretely described mainly with reference to FIG. 2.

FIG. 2 is a schematic, partial, enlarged sectional view for illustrating a convex part forming step of the concavo-convex part forming method according to the first embodiment of the present invention.

First, film configuration of the transfer film 100 having a layered structure will be described in more detail.

The transfer film 100 includes a base material layer 110, a peelable layer 120, and a decorative layer 130.

The base material layer 110 is made of polyethylene terephthalate (PET), polycarbonate (PC), oriented polypropylene (OPP) or the like with a thickness on the order of 20 to 200 µm.

The peelable layer 120 is made of a melamine resin, a silicon resin or the like with a thickness on the order of 0.5 to 5 µm.

A film made of the base material layer 110 and the peelable layer 120 may be called a base material film.

The decorative layer 130 includes a hard coat layer 131, an anchor layer 132, a color layer 133, and a bonding layer 134.

The hard coat layer 131 is made of a high-hardness ultraviolet-curing resin or the like with a thickness on the order of 1 to 10 µm, and becomes the outermost layer when the decorative layer 130 is transferred to the molding 410.

The anchor layer 132 is made of a polyester resin or the like with a thickness on the order of 1 to 10 µm and intended to add advanced properties by increasing adhesion between the hard coat layer 131 and the color layer 133.

The color layer 133 is made of a weather-resistant pigment ink, a commonly used dye ink or the like with a thickness on the order of 1 to 100 µm.

The bonding layer 134 is made of an in-mold-resistant acrylic resin, urethane resin, vinyl resin, or the like with a thickness on the order of 1 to 50 µm.

Incidentally, for example, the color layer 133 and the bonding layer 134 are not necessarily single-layered, and each of them may be made of multiple layers stacked one on top of another.

More specifically, the color layer 133, which can become transparent if not thick enough, resulting in a failure to provide a desired color, may be produced by the application of multiple coatings or may include white, black, or gray hidden layers.

Furthermore, if it is desired to provide a metallic appearance, a deposited film may be inserted between the color layer 133 and the bonding layer 134 or a metallic ink may be inserted between the anchor layer 132 and the color layer 133.

The concavo-convex-part-forming convex part 211 is formed from an ultraviolet-curing resin by inkjet printing in such a way as to have a shape that thickens toward the end as described in more detail below.

Regarding discharge of the ultraviolet-curing resin during inkjet printing, an inkjet printer 611 is controlled such that droplets 210 will be discharged one by one from a nozzle a few tens of µm in diameter.

Since the droplets 210 are minute, inward tensile stresses are caused by internal stresses of the liquid.

The droplets 210 land on the first surface of the transfer film 100 in such a way as to have a shape that thickens toward the end while maintaining an approximately spherical shape due to the tensile stresses. More specifically, the concavo-convex-part-forming convex part 211 produced by the landing droplets 210 is shaped such that a contact angle Θ with the first surface of the transfer film 100 will be an obtuse angle.

The concavo-convex-part-forming convex part 211 is cured, while maintaining its shape, with ultraviolet light radiated by an ultraviolet irradiator 621 from the side of the base material layer 110.

According to the present embodiment, the hard coat layer 131 is hardly cured with ultraviolet light unlike the conventional concavo-convex part forming method in which ultraviolet light is radiated from the side of the decorative layer 130. Therefore, it is very unlikely that the hard coat layer 131 will be cracked during in-mold molding and winding of the transfer film 100 after use. If the hard coat layer 131 is cracked, the color layer 133 might not be formed properly in the decorative layer 130 due to a lack of the anchor layer 132. This might cause bleeding during printing, resulting in deterioration in quality of appearance of the molding 410.

Of course a discharge rate of the ultraviolet-curing resin may be controlled depending on desired size of the concavo-convex-part-forming convex part 211. For example, multiple coats of the ultraviolet-curing resin may be applied at a predetermined location at a predetermined discharge rate.

In short, when the ultraviolet-curing resin is discharged multiple times and the landing droplets 210 are stacked, the concavo-convex-part-forming convex part 211 with a layer structure of a desired size can be formed, being shaped such that a contact angle Θ will be an obtuse angle on a contacting side on which the concavo-convex-part-forming convex part 211 is placed in contact with the transfer film 100, and shaped approximately spherically on a non-contacting side on which the concavo-convex-part-forming convex part 211 does not contact the transfer film 100.

The concavo-convex-part-forming convex part 211, which is shaped approximately spherically, as described above, on the non-contacting side on which the concavo-convex-part-forming convex part 211 does not contact the transfer film 100, is in point contact with the cavity surface of the first die 710 (see FIG. 3(B)). This makes it possible to transmit pressure uniformly from the cavity surface of the first die 710, realize the concavo-convex part 510 on a surface of the molding 410 with geometric accuracy as designed, and reduce molding dust resulting from the ultraviolet-curing resin attaching to the cavity surface of the first die 710 at the time of mold release.

Besides, there is no need to subject the transfer film 100 to corona treatment or other surface treatment processes during particle formation to improve wettability of the ultraviolet-curing resin.

As will be described in more detail below, since the concavo-convex-part-forming convex part 211 is pushed into the base material layer 110, causing the concavo-convex-part-forming protruding part 311 which has a shape that tapers toward the tip to be formed on a surface of the decorative layer 130 on the reverse side, the concavo-convex part 510 corresponding to shape of the concavo-convex-part-forming protruding part 311 is transferred to the surface of the molding 410.

Of course, correlation between shape of the concavo-convex-part-forming convex part 211 and shape of the concavo-convex-part-forming protruding part 311 depends on physical or chemical properties of the transfer film 100. Therefore, it is desirable to obtain experimental data on such correlation in advance and design the shape of the concavo-convex-part-forming convex part 211 based on the experimental data such that the concavo-convex-part-forming protruding part 311 will be formed into a desired shape.

Consequently, internal stresses concentrated on the concavo-convex-part-forming protruding part 311 during release from the first die 710 (see FIG. 3(B)) are reduced considerably by the shape that tapers toward the tip, preventing mold sticking to a large extent.

Next, processes of the concavo-convex part forming method according to the present embodiment will be described more concretely with reference mainly to FIGS. 3(A) to 3(F).

FIG. 3(A) is a schematic side view for illustrating an in-mold preparation process of the concavo-convex part forming method according to the first embodiment of the present invention, FIG. 3(B) is a schematic side view for illustrating a suction and film clamping process of the concavo-convex part forming method according to the first embodiment of the present invention, FIG. 3(C) is a schematic side view for illustrating a molding resin injection preparation process of the concavo-convex part forming method according to the first embodiment of the present invention, FIG. 3(D) is a schematic side view for illustrating a molding resin injection and cooling process of the concavo-convex part forming method according to the first embodiment of the present invention, FIG. 3(E) is a schematic side view for illustrating a mold release process of the concavo-convex part forming method according to the first embodiment of the present invention, and FIG. 3(F) is a schematic side view for illustrating a suction release and film unclamping process of the concavo-convex part forming method according to the first embodiment of the present invention.
(A) In-mold preparation process: The transfer film 100 is supplied from a roller 741 on the side of a feeder (not shown) toward a roller 742 on the side of a winder (not shown).
   The incoming transfer film 100 is placed in a space intended to become the cavity space, between the first die 710 and the second die 720.
(B) Suction and film clamping process: The transfer film 100 is sucked by a suction device (not shown) connected through a suction hole (not shown) provided in the first die 710 to eliminate any clearance between the first die 710 and the transfer film 100.
   The transfer film 100 is clamped to the first die 710 using film clamps 731 and 732 adapted to clamp the transfer film 100.
   Consequently, the concavo-convex-part-forming convex part 211 is held against the surface of the first die 710 and pushed toward the second die 720, thereby forming the concavo-convex-part-forming protruding part 311.
   When viewed from the cavity space, the concavo-convex-part-forming protruding part 311 in this state looks like an etching pattern formed on the cavity surface of the first die 710 by conventional etching.
(C) Molding resin injection preparation process: The first die 710 and the second die 720 are clamped together before molding resin is injected.
(D) Molding resin injection and cooling process: A proper amount of molding resin is injected through a gate 721 provided in the second die 720 into the cavity space between the first die 710 and the second die 720 clamped together.
   Then, the injected molding resin is cooled to a predetermined temperature.
(E) Mold release process: After making sure that the molding resin has been cooled to the predetermined temperature, the second die 720 is removed together with the molding 410 from the first die 710 with the transfer film 100 left sucked and clamped.
   In this way, the molding 410 is removed from the first die 710.
   The concavo-convex part 510 is formed and the decorative layer 130 is transferred to the surface of the molding 410 while the transfer film 100 containing only the base material layer 110 and peelable layer 120 are left on the surface of the first die 710
   Needless to say, the molding 410 is eventually removed from the second die 720 as well.
(F) Suction release and film unclamping process: The transfer film 100 is released from suction and unclamped from the first die 710.

Then, the used transfer film 100 is ejected from the roller 742 on the side of the winder (not shown).

Needless to say, after the used transfer film 100 is collected, a new transfer film may be supplied similarly, as required.

To further prevent mold sticking, temperature control may be performed during cooling in the molding resin injection and cooling process by providing temperature differences.

More specifically, before the first die 710 is cooled, the second die 720 can be cooled sufficiently first while maintaining the temperature of the first die 710.

In contrast, for example, if the first die 710 and the second die 720 are cooled simultaneously, temperatures of the transfer film 100 on the side of the first die 710 and the molding 410 on the side of the second die 720 lower simultaneously, causing the transfer film 100 and the molding 410 to contract in volume simultaneously. This causes noticeable seizure between the transfer film 100 and the molding 410, increasing the likelihood of mold sticking.

Thus, as described above, it is advisable to cool the second die 720 sufficiently in a former stage while maintaining the temperature of the first die 710 and cool the first die 710 in the latter stage.

That is, in the former stage, since the second die 720 is cooled while maintaining the temperature of the first die 710, the temperature of the molding 410 lowers, but the temperature of the transfer film 100 does not. Consequently, in the former stage, the transfer film 100 does not contract in volume, and only the molding 410 contracts in volume. Thus, although the molding 410 might seize the transfer film 100 to some extent, since the transfer film 100 does not contract in volume, the concavo-convex-part-forming protruding part 311 almost keeps its shape. Therefore, the concavo-convex part 510 is almost free of deformation which would cause deterioration in the appearance quality of the molding 410.

In the latter stage, since the temperature of the first die 710 is lowered, the temperature of the transfer film 100 lowers this time. Consequently, since the molding 410 has already been contracted in volume, volume contraction of only the transfer film 100, which is rather advantageous for mold release, occurs in the latter stage.

The temperature control has greatly reduced image pattern losses in the concavo-convex part 510 on the surface of the molding 410, and almost eliminated mold sticking.

Defective conditions resulting from torn-foil burrs which are scraps of the transfer film 100 left on positions P (see FIG. 1(D)) corresponding to edge positions of the molding 410 can also cause mold sticking. Such torn-foil burrs are known as foil burrs of in-mold products, and are unnecessary elements which do not contribute to concavo-convex part formation at all.

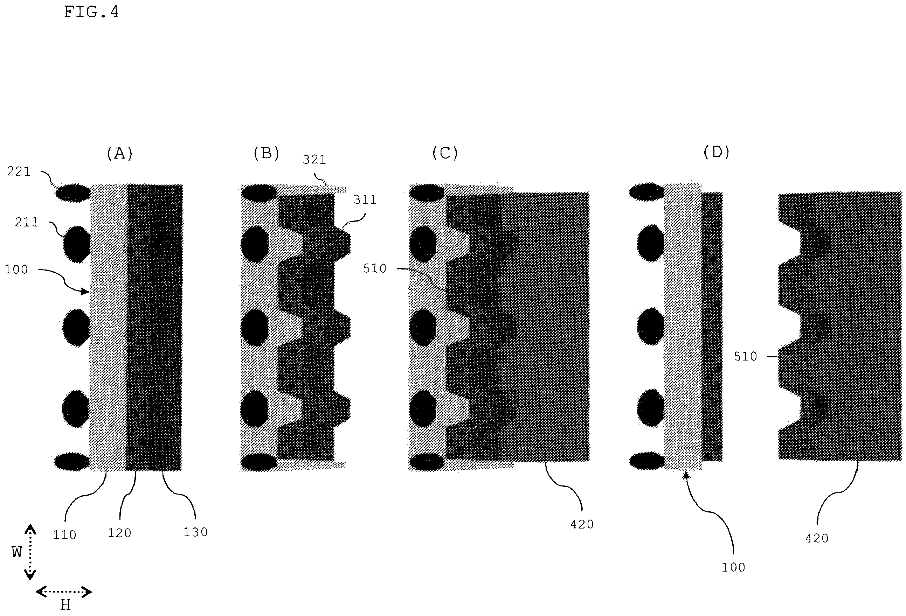

Thus, as shown in FIGS. 4(A) to 4(D), a torn-foil-burr-proof convex part 221 is further formed on the first surface of the transfer film 100 and a torn-foil-burr-proof protruding part 321 is formed at positions corresponding to edge positions of a molding 420 on the second surface of the transfer film 100.

FIG. 4(A) is a schematic sectional view for illustrating a convex part forming step of the concavo-convex part forming method according to the first embodiment of the present invention, FIG. 4(B) is a schematic sectional view for illustrating a protruding part forming step of the concavo-convex part forming method according to the first embodiment of the present invention, FIG. 4(C) is a schematic sectional view for illustrating a molding producing step (former stage) of the concavo-convex part forming method according to the first embodiment of the present invention, and FIG. 4(D) is a schematic sectional view for illustrating the molding producing step (latter stage) of the concavo-convex part forming method according to the first embodiment of the present invention.

For example, the torn-foil-burr-proof convex part 221 similar to the concavo-convex-part-forming convex part 211 is formed at positions corresponding to all the edges of the molding 420.

In short, prior to transfer of the decorative layer 130 to the molding 420, the peelable layer 120 and the decorative layer 130 are cut off from the base material layer 110 at positions corresponding to neighborhoods of the edges of the molding 420.

Defective conditions resulting from torn-foil burrs are reduced greatly by the torn-foil-burr-proof convex part 221 and mold sticking is almost completely eliminated.
(1) Desirably, the torn-foil-burr-proof convex part 221 is narrower in width than the concavo-convex-part-forming convex part 211, and (2) desirably, the torn-foil-burr-proof convex part 221 is higher than the concavo-convex-part-forming convex part 211.

The width is measured along arrow W, i.e., along a direction parallel to the first surface of the transfer film 100, and the height is measured along arrow H, i.e., along a direction perpendicular to the first surface of the transfer film 100.

Of course, what is important is to design the width and height of the torn-foil-burr-proof convex part 221 so as to minimize torn-foil burrs.

More specifically, for example, since streaky torn-foil burrs tend to occur in the length direction of the transfer film 100, the torn-foil-burr-proof convex part 221 can be made narrower in width than the concavo-convex-part-forming convex part 211 in the width direction as compared to the length direction to cut off the streaky torn-foil burrs sharply.

Besides, the surface of the molding 410 might have not only planar portions, but also curved portions.

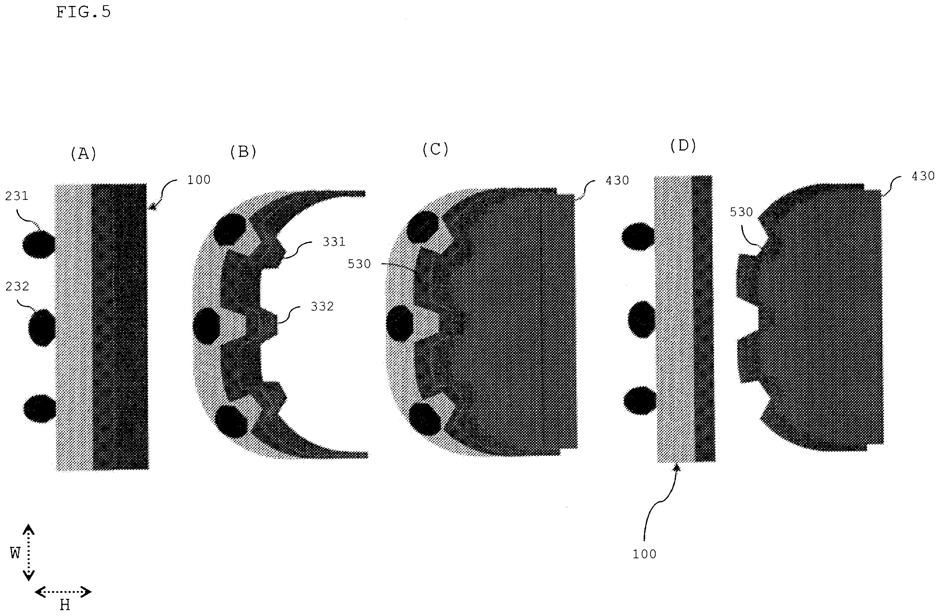

That is, as shown in FIGS. 5(A) to 5(D), (1) a concavo-convex-part-forming convex part 231 formed at a position corresponding to the surface position of a molding 430 which has a larger curvature may be narrower in width than a concavo-convex-part-forming convex part 232 formed at a position corresponding to the surface position of the molding 430 which has a smaller curvature, and (2) the concavo-convex-part-forming convex part 231 formed at the position corresponding to the surface position of the molding 430 which has a larger curvature may be higher than the concavo-convex-part-forming convex part 232 formed at the position corresponding to the surface position of the molding 430 which has a smaller curvature.

FIG. 5(A) is a schematic sectional view for illustrating a convex part forming step of the concavo-convex part forming method according to the first embodiment of the present invention, FIG. 5(B) is a schematic sectional view for illustrating a protruding part forming step of the concavo-convex part forming method according to the first embodiment of the present invention, FIG. 5(C) is a schematic sectional view for illustrating a molding producing step (former stage) of the concavo-convex part forming method according to the first embodiment of the present invention, and FIG. 5(D) is a schematic sectional view for illustrating the molding producing step (latter stage) of the concavo-convex part forming method according to the first embodiment of the present invention.

As in the case described above, the width is measured along arrow W, i.e., in the direction parallel to the first surface of the transfer film 100, and the height is measured along arrow H, i.e., in the direction perpendicular to the first surface of the transfer film 100.

The transfer film 100 undergoes elongation in the suction and film clamping process, and the elongation is larger at a position where the molding 430 has a larger surface curvature. Therefore, the concavo-convex-part-forming convex part 231 formed at the position corresponding to the surface position of the molding 430 which has a larger curvature is transformed into a flatter shape than the concavo-convex-part-forming convex part 232 in the process of being pushed into the transfer film 100. As a result, a concavo-convex-part-forming protruding part 331 formed at the position corresponding to the surface position of the molding 430 which has a larger curvature tends to be larger in width and smaller in height than a concavo-convex-part-forming protruding part 332.

Thus, to allow for the effects of the elongation of the transfer film 100, it is desirable to design the widths and heights of the concavo-convex-part-forming convex parts 231 and 232 by taking into consideration a bend radius of the surface of the molding 430.

This makes it possible, for example, to form a concavo-convex part 530 of uniform size and shape uniformly on the entire surface of the molding 430 regardless of the bend radius of the surface of the molding 430.

The widths and heights of the concavo-convex-part-forming convex parts 231 and 232 can easily be adjusted according to design, for example, by controlling the discharge rate of the ultraviolet-curing resin in the inkjet printing described above.

The present embodiment makes it easy to adjust the widths and heights of the concavo-convex-part-forming convex parts 231 and 232 unlike the conventional concavo-convex part forming method which uses the relief mold 691 (see FIG. 8(A)). Thus regarding the concavo-convex-part-forming protruding part 331 formed at the position corresponding to that surface position of the molding 430 which has a large curvature, the present embodiment also makes it easy to avoid excessive widths and deficient heights.

Of course, in view of the fact that the bend radius of the surface of the molding 430 has a bearing on mold sticking, the widths and heights of the concavo-convex-part-forming convex parts 231 and 232 may be designed in such a way as to prevent mold sticking.

Needless to say, the width and height of the concavo-convex-part-forming convex part 211 (see FIG. 3(A)) may be designed in such a way as to prevent mold sticking by taking into consideration, for example, overall surface geometry and the like of the molding 410 (see FIG. 3(E)).

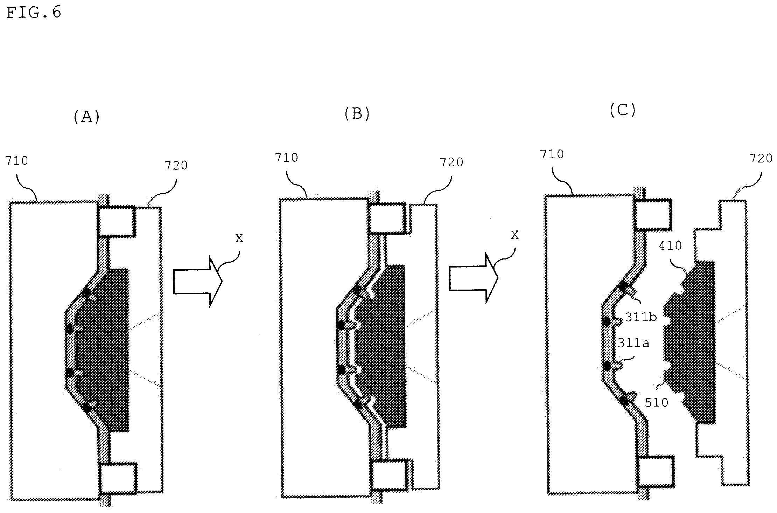

As shown in FIGS. 6(A) to 6(C), the concavo-convex part forming method according to the present embodiment can considerably prevent mold sticking in the first place even if the molding 410 has a surface geometry produced by deep-drawing.

FIG. 6(A) is a schematic sectional view for illustrating a positional relationship between the first die 710 and molding 410 at the start of mold release, according to the first embodiment of the present invention, FIG. 6(B) is a schematic sectional view for illustrating a positional relationship between the first die 710 and molding 410 in the middle of mold release, according to the first embodiment of the present invention, and FIG. 6(C) is a schematic sectional view for illustrating a positional relationship between the first die 710 and molding 410 at the end of mold release, according to the first embodiment of the present invention.

In FIGS. 6(A) to 6(C), the decorative layer 130 (see FIG. 3(E)) is omitted.

In mold release, the process which requires the most care is a process in the middle of mold release, i.e., the process of separating the second die 720 together with the molding 410 from the first die 710 in a direction of arrow X.

Actually, in such a process, a concavo-convex-part-forming protruding part 311a formed at a position corresponding to an undersurface of a deep-drawn shape rarely interferes with the concavo-convex part 510, but a concavo-convex-part-forming protruding part 311b formed at a position corresponding to a side face of a deep-drawn shape tends to interfere with the concavo-convex part 510 after all.

Of course, the width and height of the concavo-convex-part-forming convex part 211 (see FIG. 1 (A)) used to form the concavo-convex-part-forming protruding part 311 (see FIG. 1 (B)) may be designed in such a way as to avoid the interference, as described above.

Although such design is difficult in practice, since the concavo-convex-part-forming protruding part 311b has a shape that tapers toward the tip, the concavo-convex part forming method according to the present embodiment ensures slidability between the concavo-convex-part-forming protruding part 311b and concavo-convex part 510, which is advantageous for mold release.

Thus, even if there is some interference between the concavo-convex-part-forming protruding part 311b and concavo-convex part 510, mold sticking which would cause a marked deterioration in the appearance quality of the molding 410 is less likely to occur.

### (Illustrative embodiment not part of the invention)

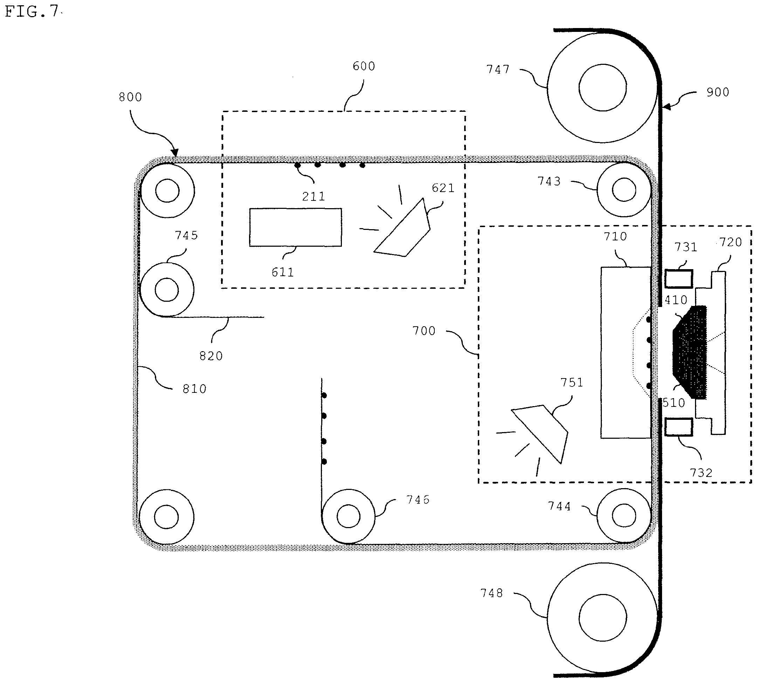

First, a configuration of a concavo-convex part forming apparatus according to the present embodiment will be described mainly with reference to FIG. 7.

FIG. 7 is a schematic side view of a concavo-convex part forming apparatus according to the present illustrative embodiment not part of the invention.

The concavo-convex part forming apparatus according to the present embodiment includes a first unit 600 and a second unit 700.

The first unit 600 is designed to form the concavo-convex-part-forming convex part 211 on a first surface of a transfer film 800 using inkjet printing, where the concavo-convex-part-forming convex part 211 is used to form the concavo-convex part 510 on the surface of the molding 410.

The second unit 700 is designed to push the formed concavo-convex-part-forming convex part 211 (see FIG. 1 (A)) into the transfer film 800, by placing the first surface of the transfer film 800 in close contact with the cavity surface of the first die 710, so that the concavo-convex-part-forming protruding part 311 (see FIG. 1(B)) will be formed on a second surface of the transfer film 800.

The second unit 700 is designed to clamp the first die 710 and the second die 720 paired with the first die 710, with the first surface of the transfer film 800 being placed in close contact with the cavity surface of the first die 710, inject a molding resin for the molding 410 into a cavity space between the first die 710 and the second die 720, and thereby produce the molding 410 with the concavo-convex part 510 formed on the molding 410 using the formed concavo-convex-part-forming protruding part 311 (see FIG. 1(B)).

Now, film configuration of the transfer film 800 having a layered structure of a concavo-convex-part-forming functional film will be described in more detail.

The transfer film 800 includes a base material layer 810 and a peelable layer 820.

The base material layer 810 is made of polyethylene terephthalate with a thickness on the order of 20 to 200 µm.

The peelable layer 820 is made of an ultraviolet-curing resin with a thickness on the order of 1 to 10 µm and laminated onto a surface of the base material layer 810, being adhesive on one side.

On the surface of the peelable layer 820 which is not laminated on the surface of the base material layer 810, the concavo-convex-part-forming convex part 211 is formed from an ultraviolet-curing resin by inkjet printing so as to have a shape that thickens toward the end.

The transfer film 800 has a thickness on the order of 10 to 50 µm and is used in conjunction with a regular image pattern transfer film 900.

Next, operation of the concavo-convex part forming apparatus according to the present embodiment will be described.

The first unit 600 forms the concavo-convex-part-forming convex part 211 on the first surface of the transfer film 800 using inkjet printing, where the concavo-convex-part-forming convex part 211 is used to form the concavo-convex part 510 on the surface of the molding 410.

The concavo-convex-part-forming convex part 211 is formed in the same manner as by the concavo-convex part forming method according to the first embodiment described above.

The image pattern transfer film 900 is supplied from a roller 747 on the side of a feeder (not shown) toward a roller 748 on the side of a winder (not shown).

Then, the transfer film 800 laminated with the peelable layer 820 supplied from a roller 745 on the side of the feeder (not shown) is inserted, having been delivered to a roller 744 on the side of the winder (not shown) from a roller 743 on the side of the feeder (not shown).

A controller (not shown), which includes a CCD (Charge Coupled Device) camera and has image scanning and recognition capabilities, performs tension control to align the transfer film 800 and the image pattern transfer film 900 with each other before in-mold molding using alignment marks placed in advance on the transfer film 800 and the image pattern transfer film 900.

Thus, according to the present embodiment, next in-mold molding is performed using the transfer film 800 and the image pattern transfer film 900 aligned with each other in this way.

By placing the first surface of the transfer film 800 in close contact with the cavity surface of the first die 710, the second unit 700 pushes the formed concavo-convex-part-forming convex part 211 (see FIG. 1 (A)) into the transfer film 800 so that the concavo-convex-part-forming protruding part 311 (see FIG. 1(B)) will be formed on the second surface of the transfer film 800.

The concavo-convex-part-forming protruding part 311 (see FIG. 1(B)) is formed in the same manner as by the concavo-convex part forming method according to the first embodiment described above.

Then, the second unit 700 clamps the first die 710 and the second die 720 paired with the first die 710, with the first surface of the transfer film 800 being placed in close contact with the cavity surface of the first die 710, injects a molding resin for the molding 410 into a cavity space between the first die 710 and the second die 720, and thereby produces the molding 410 with the concavo-convex part 510 formed, using the formed concavo-convex-part-forming protruding part 311 (see FIG. 1(B)).

The molding 410 is produced in the same manner as by the concavo-convex part forming method according to the first embodiment described above.

The image pattern transfer film 900 is ejected from the roller 748 on the side of the winder (not shown).

When the concavo-convex-part-forming convex part 211 is newly formed with changes made based on a design of the concavo-convex part 510 to be formed on the surface of the molding 410, the transfer film 800 is delivered via the roller 744 on the side of the winder (not shown). Furthermore, an ultraviolet irradiator 751 cures the peelable layer 820 by irradiating the used transfer film 800 with ultraviolet light, and thereby reduces adhesion on that side of the peelable layer 820 which is laminated on the surface of the base material layer 810. Consequently, the peelable layer 820 is peeled from the base material layer 810 and ejected from a roller 746.

In this way, while recycling the base material layer 810, it is possible to respond, on demand, to design changes and the like of the concavo-convex part 510 formed on the surface of the molding 410.

The concavo-convex part forming method according to the embodiments described above can be used for applications such as product surface decoration, Braille characters and the like. Concrete examples of products include television sets, portable audio devices, cell phones, washing machines, air conditioners, refrigerators, and electric rice cookers as well as automotive interior products such as car navigation systems and instrumental panels.

Of course, although in the embodiments described above, the concavo-convex part is formed on the surface of the molding 410 at a point in time for the molding, this is not restrictive, and it goes without saying that the concavo-convex part may be formed on the surface of the molding 410, for example, at a point in time different from that for the molding, by softening the surface of the shaped molding 410 in advance.

Incidentally, a unit including the inkjet printer 611 in the embodiments described above corresponds to the convex part forming unit according to the present invention.

Also, a unit including the first die 710 and the film clamps 731 and 732 in the embodiments described above corresponds to the protruding part forming unit according to the present invention.

Also, a unit including the first die 710 and the second die 720 in the embodiments described above corresponds to the object producing unit according to the present invention.

The concavo-convex part forming method according to the present invention is capable of giving a higher-quality appearance to product surface decoration, Braille characters and the like, and useful in decorating surfaces of products such as cell phones, television sets, and refrigerators as well as producing Braille characters on product surfaces.

## Claims

1. A concavo-convex part forming method for forming, using a film, a concavo-convex part on a surface of an object, comprising:
a convex part forming step of forming, on a first surface of the film, a concavo-convex-part-forming convex part (211, 231, 232, 291) for forming the concavo-convex part on the surface of the object;
a protruding part forming step of pushing the formed concavo-convex-part-forming convex part into the film so that a concavo-convex-part-forming protruding part (311, 311 a, 311 b, 331, 332, 391) is formed on a second surface of the film; and
an object producing step of producing the object having the concavo-convex part, using the formed concavo-convex-part-forming protruding part, wherein
the convex part forming step forms the concavo-convex-part-forming convex part so that, in the protruding part forming step, the concavo-convex-part-forming protruding part is formed to have a shape that tapers toward a tip, and
**characterized in that**
the convex part forming step further forms a torn-foil-burr-proof convex part (221) on the first surface of the film so that, in the protruding part forming step, a torn-foil-burr-proof protruding part (321) is formed on the second surface of the film at a position corresponding to an edge position of the object.

2. The concavo-convex part forming method according to Claim 1, wherein the torn-foil-burr-proof convex part (221) is narrower in width than the concavo-convex-part-forming convex part (211, 231, 232, 291).

3. The concavo-convex part forming method according to Claim 1, wherein the torn-foil-burr-proof convex part (321) is higher than the concavo-convex-part-forming convex part (211, 231, 232, 291).

## Patentansprüche

1. Verfahren für die Ausbildung eines konkav-konvexen Teils, um einen konkav-konvexen Teil auf einer Oberfläche eines Gegenstandes unter Verwendung eines Films auszubilden, umfassend:
einen Schritt zum Ausbilden eines konvexen Teils, um auf einer ersten Oberfläche des Films einen einen konkav-konvexen Teil ausbildenden konvexen Teil (211, 231, 232, 291) auszubilden, um den konkav-konvexen Teil auf der Oberfläche des Gegenstandes auszubilden;
einen Schritt zum Ausbilden eines hervorragenden Teils, um den ausgebildeten konkav-konvexen Teil ausbildenden konvexen Teil in den Film zu drücken, so dass ein einen konkav-konvexen Teil ausbildender hervorragender Teil (311, 311 a, 311b, 331, 332, 391) auf einer zweiten Oberfläche des Films ausgebildet wird; und
einen Objekterzeugungsschritt des Erzeugens des Objektes, das den konkav-konvexen Teil hat, unter Verwendung des ausgebildeten den konkav-konvexen Teil ausbildenden hervorragenden Teils, wobei
der Schritt zum Ausbilden des konkaven Teils den den konkav-konvexen Teil ausbildenden konvexen Teil derart ausbildet, dass bei dem Schritt des Ausbildens des hervorragenden Teils, der den konkav-konvexen Teil ausbildende hervorragende Teil derart ausgebildet wird, dass er eine Form hat, die sich zu einer Spitze verjüngt, und
**dadurch gekennzeichnet, dass**
der Schritt zum Ausbilden des konvexen Teils weiterhin einen gegen einen Abziehfoliengrat gesicherten konvexen Teil (221) auf der ersten Oberfläche der Folie ausbildet, so dass bei dem Schritt zum Ausbilden des hervorragenden Teils, ein gegen einen Abziehfoliengrat gesicherter Teil (321) auf der zweiten Oberfläche des Films an einer Position ausgebildet wird, die einer Randposition des Gegenstandes entspricht.

2. Verfahren für die Ausbildung eines konkav-konvexen Teils nach Anspruch 1, bei dem der gegen einen Abziehfoliengrat gesicherte konvexe Teil (221) eine geringere Breite hat als der den konkav-konvexen Teil ausbildende konvexe Teil (211, 231, 232, 291).

3. Verfahren für die Ausbildung eines konkav-konvexen Teils nach Anspruch 1, bei dem der gegen einen Abziehfoliengrat gesicherte konvexe Teil (321) höher ist als der den konkav-konvexen Teil ausbildende konvexe Teil (211, 231, 232, 291).

## Revendications

1. Procédé de formation d'une pièce concavo-convexe permettant de façonner, en utilisant un film, une pièce concavo-convexe sur une surface d'un objet, comprenant :
une étape de formation de pièce convexe consistant à former, sur une première surface du film, une pièce convexe formant pièce concavo-convexe (211, 231, 232, 291) destinée à former la pièce concavo-convexe sur la surface de l'objet,
une étape de formation de pièce en saillie consistant à repousser la pièce convexe formant pièce concavo-convexe dans le film de telle sorte qu'une pièce saillante formant pièce concavo-convexe (311, 311a, 311b, 331, 332, 391) soit formée sur une seconde surface du film, et
une étape de génération d'objet consistant à générer l'objet comportant la pièce concavo-convexe en utilisant la pièce saillante formant pièce concavo-convexe, dans lequel
l'étape de formation de pièce convexe forme la pièce convexe formant pièce concavo-convexe de sorte à ce que, lors de l'étape de formation de pièce saillante, la pièce saillante formant pièce concavo-convexe soit formée pour présenter une forme qui vient en s'effilant vers la pointe, et
**caractérisé en ce que**
l'étape de formation de pièce convexe forme en outre une pièce convexe exempte de déchirure, pellicule, bavure (221) sur la première surface du film de sorte à ce que, lors de l'étape de formation de pièce saillante, une pièce saillante exempte de déchirure, pellicule, bavure (321) soit formée sur la seconde surface du film à une position correspondant à une position de bord de l'objet.

2. Procédé de formation de pièce concavo-convexe selon la revendication 1, dans lequel la pièce convexe exempte de déchirure, pellicule, bavure (221) est de largeur plus étroite que la pièce convexe formant pièce concavo-convexe (211, 231, 232, 291).

3. Procédé de formation de pièce concavo-convexe selon la revendication 1, dans lequel la pièce convexe exempte de déchirure, pellicule, bavure (321) est plus haute que la pièce convexe formant pièce concavo-convexe (211, 231, 232, 291).
